# EUROPEAN PATENT APPLICATION

(11) **EP 4 621 695 A1**
(43) Date of publication of application: **24.09.2025**
(21) Application number: 23891329.7
(22) Date of filing: 27.10.2023
(51) Int. Cl.: G06Q 30/0251, G06Q 30/0601

(54) **INFORMATION PROCESSING DEVICE, INFORMATION PROCESSING METHOD, AND PROGRAM**

(30) Priority: 18.11.2022 JP 2022185079; 18.11.2022 JP 2022185080
(71) Applicant: ZOZO, Inc., Chiba-shi, Chiba, 263-0023 (JP)
(72) Inventor: IETA Tsuyoshi, Chiba-shi, Chiba 263-0023 (JP); LI Bo, Auckland 1023 (NZ); JELLEYMAN Hamish, Auckland 1023 (NZ); BRENNAN Matthew, Auckland 1023 (NZ)
(74) Representative: Gunzelmann, Rainer
(86) International application number: PCT/JP2023/038839
(87) International publication number: WO 2024/106175

(57) **Abstract**

An information processing apparatus (10) includes an estimation section (44) that estimates a time period during which a wearer (W1) can wear a wearing article (for example, shoes) with a predetermined comfort level or higher based on variation information indicating variation in the comfort level of the wearing article for the wearer (W1) over time, and a provision section (45) that provides information corresponding to the time period estimated by the estimation section (44) to a predetermined destination.

## Description

### [TECHNICAL FIELD]

The present invention relates to an information processing apparatus and the like.

### [BACKGROUND ART]

There have been proposed technologies for providing information about clothing that corresponds to changes in the wearer's body shape. As an example of such a technology, there is known a technology by which when children's clothing is selected as a purchase target product, acceptable sizes of the children's clothing are acquired from a clothing database that holds the body sizes with which children's clothing can be worn as acceptable sizes, entry of a child user's body size and age is received, growth pattern data of the child user is obtained from a growth pattern database, and the time period during which the children's clothing can be worn is predicted based on the acceptable sizes and growth pattern.

### [RELATED-ART DOCUMENT]

### [PATENT DOCUMENT]

Patent Document 1: Japanese Unexamined Patent Application Publication No. 2007-265077

### [SUMMARY OF THE INVENTION]

### [TECHNICAL PROBLEM]

However, the above-described technology cannot be said to be able to present information about wearing articles that are comfortable for the wearer. Further, the above-described technology cannot be said to be able to generate information on the time period during which the wearer can comfortably wear the wearing articles.

For example, the above-described technology merely provides a configuration for determining the limit date that is a timing at which a child user's body size will exceed the allowable range of selected children's clothing and displaying it on a screen, but it cannot be said to be able to present information on wearing articles that the wearer can wear comfortably. Further, the above-described technology merely provides a configuration for determining the limit date that is a timing at which a child user's body size will exceed the allowable range of the selected child's clothing, and but it cannot be said to be able to generate information on the time period during which the wearer can comfortably wear the wearing articles.

An object of the present application is to provide a new information processing technology taking into consideration the fact that there is a limit to the time period during which a wearer can comfortably wear a wearing article.

### [SOLUTION TO PROBLEM]

In accordance with one of some embodiments, there is provided an information processing apparatus comprising: an estimation section that estimates a time period during which a wearer is allowed to wear a wearing article with a predetermined comfort level or higher based on variation information indicating variation over time in the comfort level of the wearing article for the wearer; and a provision section that provides information corresponding to the time period estimated by the estimation section to a predetermined destination.

Another aspect of the present invention relates to an information processing apparatus including a generation section that generates, for each of a plurality of wearing articles, variation information indicating variation in comfort level for the wearer over time based on wearing article information on each of the plurality of wearing articles and wearer information on the wearer, and a registration section that registers the variation information generated by the generation section.

### [BRIEF DESCRIPTION OF DRAWINGS]

[FIG. 1] FIG. 1 is a diagram illustrating a configuration example of an information processing system 1 according to an embodiment.
[FIG. 2] FIG. 2 is a diagram illustrating an example of information processing according to the embodiment.
[FIG. 3A] FIG. 3A is a diagram illustrating an example of a screen on a user terminal 100 according to the embodiment.
[FIG. 3B] FIG. 3B is a diagram illustrating an example of a screen on the user terminal 100 according to the embodiment.
[FIG. 4] FIG. 4 is a diagram illustrating a configuration example of an information processing apparatus 10 according to an embodiment.
[FIG. 5] FIG. 5 is a diagram illustrating an example of a wearing article information database 31 according to the embodiment.
[FIG. 6] FIG. 6 is a diagram illustrating an example of a wearer information database 32 according to the embodiment.
[FIG. 7] FIG. 7 is a diagram illustrating an example of a variation information database 33 according to the embodiment.
[FIG. 8] FIG. 8 is a flowchart illustrating an example of a procedure of information processing according to the embodiment.
[FIG. 9] FIG. 9 is a hardware configuration diagram illustrating an example of a computer that implements the functions of the information processing apparatus 10.

### [DESCRIPTION OF EMBODIMENTS]

Hereinafter, embodiments for carrying out an information processing apparatus, an information processing method, and an information processing program according to the present application (hereinafter, referred to as "embodiments") will be described in detail with reference to the drawings. Note that the information processing apparatus, the information processing method, and the information processing program according to the present application are not limited to these embodiments. The same components in the following embodiments are given the same reference numerals, and duplicated description thereof will be omitted.

### (Embodiment)

### <1. Configuration of Information Processing System>

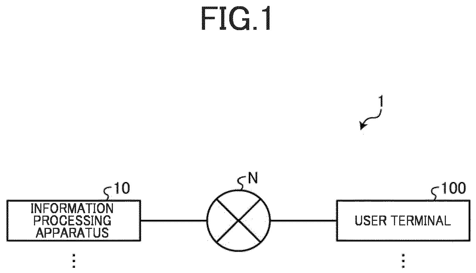

First, an information processing system 1 according to an embodiment will be described. FIG. 1 is a diagram illustrating a configuration example of the information processing system 1 according to the embodiment. As illustrated in FIG. 1, the information processing system 1 includes an information processing apparatus 10 and a user terminal 100. The information processing apparatus 10 and the user terminal 100 are connected to each other via a predetermined communication network (network N) so as to be communicable with each other by wire or wirelessly. The information processing system 1 illustrated in FIG. 1 may include a plurality of information processing apparatus 10 and a plurality of user terminals 100.

The information processing apparatus 10 is an information processing apparatus for processing information on wearing articles that can be worn comfortably by the wearer, and is implemented by a server device or a cloud system, for example. For example, the information processing apparatus 10 provides an electronic commerce service that offers wearing articles such as shoes to a user (for example, a parent of the wearer), and provides information on the wearing articles to the user via the electronic commerce service.

The information processing apparatus 10 may also function as a web server that provides a website related to the service. The information processing apparatus 10 may also be an apparatus that distributes information to be displayed on applications related to various services installed in the user terminal 100. The information processing apparatus 10 may also be an apparatus that distributes the application data itself.

The information processing apparatus 10 may also function as a distribution apparatus that distributes control information to the user terminal 100. The control information here is written in a script language such as JavaScript (registered trademark) or a style sheet language such as Cascading Style Sheets (CSS), for example. The application itself delivered from the information processing apparatus 10 may be regarded as the control information.

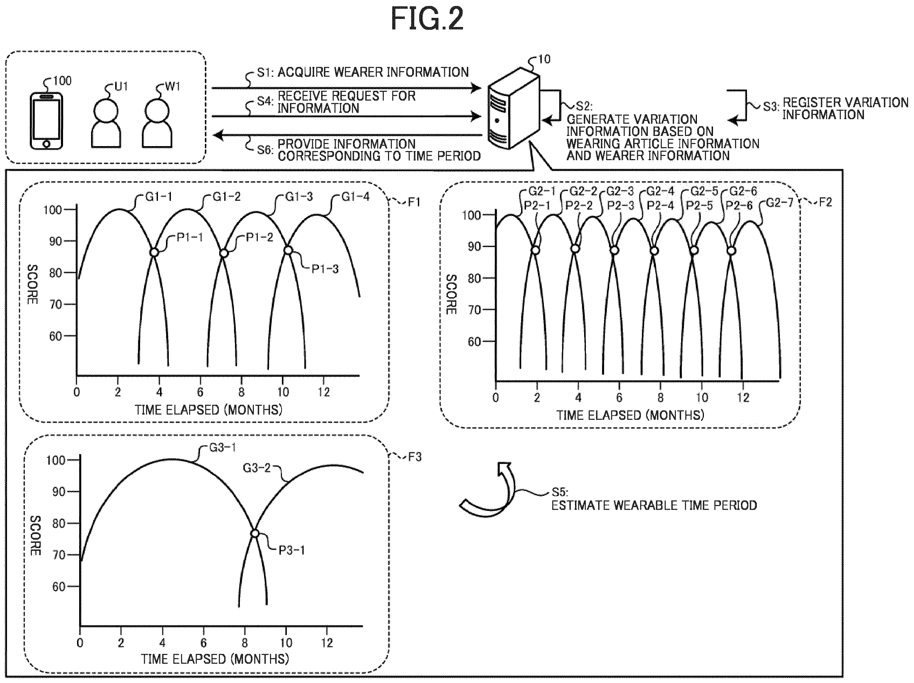

The user terminal 100 is an information processing apparatus used by a user. The user terminal 100 is implemented by a smartphone, a tablet terminal, a notebook personal computer (PC), a desktop PC, a mobile phone, a personal digital assistant (PDA), or the like, for example. Further, the user terminal 100 displays information distributed by the information processing apparatus 10 or a server device providing a predetermined service, using a web browser or an application. In the example illustrated in FIG. 2, the user terminal 100 is a smartphone.

### <2. Example of Information Processing>

Next, an example of information processing implemented by the information processing apparatus according to the present embodiment will be described with reference to FIG. 2. FIG. 2 is a diagram illustrating an example of information processing according to the embodiment. In the following description, it is assumed that the user terminal 100 is used by a user (user U1) identified by a user ID "UID#1". In the following description, the user terminal 100 may be regarded as the same as the user U1. In other words, in the following, the user U1 can also be read as the user terminal 100.

In the following description, a wearer (wearer W1) identified by a wearer ID "WID#1" is a child of the user U1 as an example. In the following description, the wearing article is shoes as an example.

First, the information processing apparatus 10 acquires wearer information on the wearer W1 from the user terminal 100 (step S1). For example, the information processing apparatus 10 acquires wearer information including attributes of the wearer W1 (for example, gender, age, and the like), the shape of the body part (foot) where the wearer W1 wears the wearing article, and the degree of growth of the wearer W1's feet. As a specific example, the information processing apparatus 10 captures an image of the foot of the wearer W1 placed on a predetermined mat and its surrounding area using the user terminal 100, creates a 3D model of the foot based on dots (markers) on the mat, and obtains information of measurement via a measuring means capable of measuring the size of the foot and toes (for example, the overall shape of the foot, the shape of the instep, the size of the foot, the width of the foot, whether the foot is flat, and the like) as information indicating the shape of foot of the wearer W1. The information processing apparatus 10 also acquires the degree of growth of the wearer W1's feet, which is estimated based on the information of measurement via the above-described measuring means and the attributes of the wearer W1.

The degree of growth of the wearer W1's feet may be an average value of the attributes of the wearer W1, or may be estimated based on the average value and information of measurement via the above-described measuring means (that is, actual measured value). In addition, the degree of growth of the wearer W1's feet may be estimated based on information on the wearer W1 (for example, height, weight, attributes, and the like) input by the user U1, or images of the wearer W1's body (for example, images of the wearer W1's body captured from various angles).

Next, the information processing apparatus 10 generates, for each wearing article, variation information indicating variation in the comfort level for the wearer W1 over time based on the wearing article information on the wearing article and the wearer information (step S2). For example, the information processing apparatus 10 calculates the comfort level of the wearing article for the wearer W1 at each point in the time period (for example, a score indicating a value from "0 (very bad)" to "100 (very good)") based on wearing article information including information indicating the size of the wearing article, the material of the wearing article, and evaluations of the wearing article from users who purchased the wearing article (for example, evaluations from users who have a child that is a wearer with wearer information similar to that of the wearer W1), and wearer information including information indicating the shape of the wearer W1's feet and information indicating the degree of growth of the wearer W1's feet over a predetermined time period (in the example of FIG. 2, a time period from the present to 12 months later), and generates variation information in which the calculated comfort level is graphed.

As a specific example, the information processing apparatus 10 generates variation information F1 indicating G1-1, which is a graph of the score for a wearing article #1 with a size of 12 cm, G1-2, which is a graph of the score for the wearing article #1 with a size of 12.5 cm, G1-3, which is a graph of the score for the wearing article #1 with a size of 13 cm, and G1-4, which is a graph of the score for the wearing article #1 with a size of 13.5 cm. Similarly, the information processing apparatus 10 generates variation information F2 indicating a graph of the scores for each size of a wearing article #2, variation information F3 indicating a graph of the scores for each size of a wearing article #3, and the like.

As a more specific example, even if the wearing articles #1 and #2 are of the same size, in the case where the wearing article #2 is designed to be tighter (for example, the wearing article #2 is manufactured using a non-stretchy material), the information processing apparatus 10 generates variation information F2 that shows a graph with a steeper shape than the variation information F1 (in other words, the time period during which the wearing article #2 can be worn comfortably is shorter). In addition, even if the wearing articles #1 and #3 are of the same size, in the case where the wearing article #3 is designed to be larger (for example, in the case where the wearing article #3 is manufactured using a stretchy material), the information processing apparatus 10 generates variation information F3 that shows a graph with a gentler shape than the variation information F1 (in other words, the time period during which the wearing article #3 can be worn comfortably is longer).

If the size increments of the wearing article #3 are larger than the size increments of the wearing article #1 (for example, the size increments of the wearing article #3 are 1 cm and the size increments of the wearing article #1 are 0.5 cm), the information processing apparatus 10 generates variation information F3 that shows a graph with a gentler shape than the variation information F1.

Next, the information processing apparatus 10 registers the variation information in the storage section of the apparatus itself (step S3). For example, the information processing apparatus 10 registers the variation information F1, F2, F3, ... in the storage section of the apparatus in association with the wearer W1.

Next, the information processing apparatus 10 receives a request for information on a wearing article from the user terminal 100 (step S4). For example, the information processing apparatus 10 receives a request for information on a wearing article corresponding to a search query entered by the user U1 in an electronic commerce service.

The information processing apparatus 10 may acquire wearer information together with a request for information on the wearing article. Then, the information processing apparatus 10 may generate variation information based on the acquired wearer information, or update the variation information registered in association with the wearer W1.

In the example of FIG. 2, it is assumed that a request for information on wearing articles including the wearing articles #1 to #3 is received from the user terminal 100. In this case, the information processing apparatus 10 estimates time periods during which the wearer W1 can comfortably wear the wearing articles for which information provision has been requested (step S5). For example, based on the variation information, the information processing apparatus 10 estimates that, out of the time periods during which the wearing article of individual sizes is to be worn, the time period with a score of 80 or higher is the time period during which the wearer W1 can comfortably wear the wearing article.

As a specific example, since the wearing article #1 of the size corresponding to a graph G1-1 of the variation information F1 has a score of 80 or more for the time period from the present to four months later, the information processing apparatus 10 estimates that this time period is the time period during which the wearer W1 can comfortably wear the wearing article #1 of that size. In addition, since the wearing article #1 of a size corresponding to a graph G1-2 of the variation information F1 has a score of 80 or more from three months later from now to eight months later from now, the information processing apparatus 10 estimates that this time period is the time period during which the wearer W1 can comfortably wear the wearing article #1 of that size. The information processing apparatus 10 performs the same estimation for graphs G1-3 and G1-4.

The information processing apparatus 10 may estimate that the time period from the present time to the point at which an intersection P1-1 of the graphs G1-1 and G1-2 occurs (in other words, the point at which it is recommended to change from the size corresponding to the graph G1-1 to the size corresponding to the graph G1-2) is the time period during which the wearer W1 can comfortably wear the wearing article #1 of the size corresponding to the graph G1-1 of the variation information F1.

In addition, since the wearing article #2 of the size corresponding to a graph G2-1 of the variation information F2 has a score of 80 or more for the time period from the present time to two months later, the information processing apparatus 10 estimates that this time period is the time period during which the wearer W1 can comfortably wear the wearing article #2. The information processing apparatus 10 performs the same estimation for graphs G2-2 to G2-7.

In addition, since the wearing article #3 of the size corresponding to a graph G3-1 of the variation information F3 has a score of 80 or more for the time period from one month later from now to eight months later from now, the information processing apparatus 10 estimates that this time period is the time period during which the wearer W1 can comfortably wear the wearing article #3. The information processing apparatus 10 performs the same estimation for a graph G3-2.

Next, the information processing apparatus 10 provides information corresponding to the time periods estimated in step S5 to the user terminal 100 via the electronic commerce service (step S6). For example, for each size of the wearing article for which information provision has been requested, the information processing apparatus 10 provides information indicating the time period during which the wearer W1 can comfortably wear the wearing article, the current score, and the like.

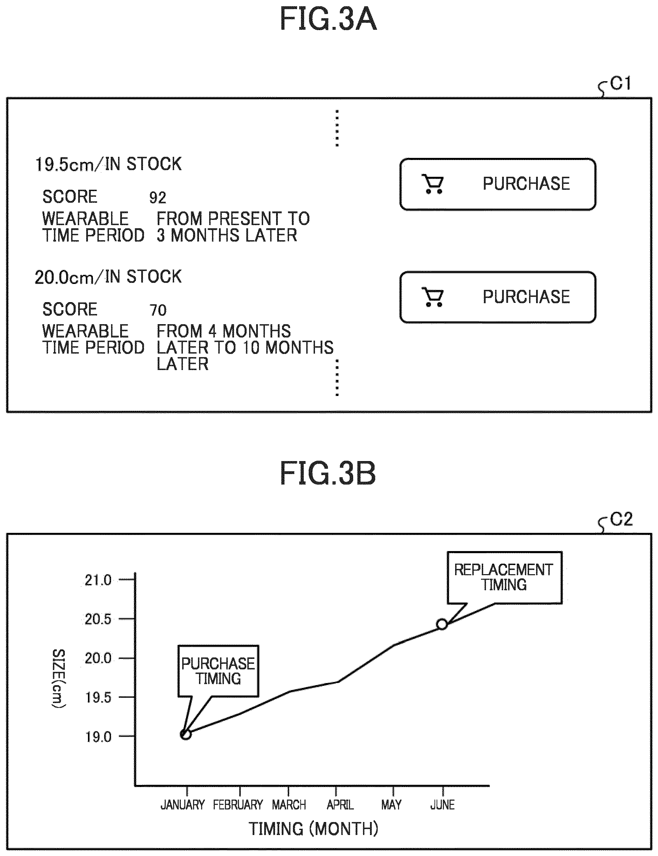

An example of information provided to the user terminal 100 will be described with reference to FIGS. 3A and 3B. FIGS. 3A and 3B are diagrams illustrating examples of screens on the user terminal 100 according to the embodiment.

As illustrated in FIG. 3A, the user terminal 100 displays a screen C1 illustrating each size of a wearing article, the current score of the size, the time period during which the wearing article of that size can be worn comfortably (the period during which it can be worn), and the like.

The information processing apparatus 10 may further provide to the user terminal 100 information on the wearing articles that the user U1 previously purchased through the electronic commerce service (in other words, the wearing articles currently being worn by the wearer W1) and information indicating the degree of growth of the wearer W1's feet. For example, as illustrated in FIG. 3B, the user terminal 100 displays a screen C2 that illustrates a graph indicating the degree of growth of the wearer W1's feet, and the timing at which the wearer W1 purchased a wearing article of the size currently worn, and the timing at which the score of the wearing article will be less than 80 or the score of a wearing article of another size will be higher than the score of the wearing article (replacement timing of the wearing article).

The information processing apparatus 10 may provide information on wearing articles with a score of 80 or more at the replacement timing. The information processing apparatus 10 may further provide information to be displayed on the screen C2 at a time point a predetermined time period (for example, one month) before the replacement timing, or information on wearing articles with a score of 80 or more at the replacement timing.

As described above, the information processing apparatus 10 according to the embodiment generates, for each wearing article, variation information indicating the variation in the comfort level for the wearer W1 over time based on wearing article information on the wearing article and wearer information on the wearer, estimates the time period during which the wearer W1 can comfortably wear the wearing article based on the variation information, and provides information corresponding to the estimated time period. Accordingly, the information processing apparatus 10 according to the embodiment can generate information on the period during which the wearer can comfortably wear the wearing article, and can present information on the wearing article that the wearer can comfortably wear.

### <3. Other Processing Examples>

The above-described processing is merely an example, and the information processing apparatus 10 may perform various types of processing using various types of information. In this regard, the following examples will be provided.

### <3-1. Provision of Information corresponding to Time Period>

In the example of FIG. 2, in response to a request for information on wearing articles, the information processing apparatus 10 may provide to the user terminal 100 information on wearing articles of a size for which the time period during which the score is 80 or higher is a predetermined threshold or longer (for example, six months or longer). The predetermined threshold here may be set by the user U1.

At the time of provision of information on wearing articles, the information processing apparatus 10 may provide to the user terminal 100 information on wearing articles of which the score is 80 or more for a longer period of time, with a higher priority.

### <3-2. Setting of Score Threshold by User>

In the example of FIG. 2, the information processing apparatus 10 may estimate the time period during which the wearer W1 can wear the wearing article and the score is equal to or greater than a threshold set by the user U1. For example, it is assumed that the user U1 wishes to purchase a wearing article that can be worn for as long as possible even if there is some difference between the size of the wearer's feet and the size of the wearing article, and sets the score threshold to 70. In such a case, since the wearing article #3 of the size corresponding to the graph G3-1 of the variation information F3 has a score of 70 or more for the time period from the present time to 8.5 months later, the information processing apparatus 10 estimates that this time period is the time period during which the wearer W1 can comfortably wear the wearing article #3 of that size.

Also, for example, it is assumed that the user U1 places importance on the ease of movement when wearing the wearing article and sets the score threshold to 95. In such a case, since the wearing article #1 of the size corresponding to the graph G1-1 of the variation information F1 has a score of 95 or more in the time period from one month later from now to three months later from now, the information processing apparatus 10 estimates that this time period is the time period during which the wearer W1 can comfortably wear the wearing article #1 of that size. In addition, since the wearing article #2 of the size corresponding to the graph G2-1 of the variation information F2 has a score of 95 or more for the time period from the present time to 1.5 months later, the information processing apparatus 10 estimates that this time period is the time period during which the wearer W1 can comfortably wear the wearing article #2 of that size.

### <3-3. Score Thresholds according to Categories of Wearing Articles>

In the example of FIG. 2, the information processing apparatus 10 may estimate the time period during which the wearer W1 can wear the wearing article and the score is equal to or greater than a threshold corresponding to the category of the wearing article. For example, if the category of the wearing article #1 is "sports shoes", the information processing apparatus 10 places emphasis on the ease of movement when worn, sets the score threshold to 95, and estimates the time period during which the wearing article #1 can be worn with a score of 95 or above for each size of the wearing article #1.

### <3-4. Score Threshold According to Wearing Article Worn by Wearer>

In the example of FIG. 2, the information processing apparatus 10 may estimate the time period during which the wearer W1 can wear the wearing article and the score is equal to or greater than a threshold corresponding to a wearing article previously worn by the wearer W1. For example, if the wearer W1 replaces a wearing article when the score falls below 90, the information processing apparatus 10 sets the score threshold to 90 and estimates, for each size of the wearing article #1, the time period during which the wearing article #1 can be worn with a score of 90 or more.

### <3-5. Variation Information based on Wearer Preferences>

In the example of FIG. 2, the information processing apparatus 10 may generate variation information based on the wearer W1's preferences for wearing articles (for example, prefers larger sizes). For example, the information processing apparatus 10 generates variation information based on wearing article information and wearer information, the wearing article information including evaluations of wearing articles from users who have children as wearers with preferences similar to those of the wearer W1.

### <3-6. Variation Information based on Difference between Left and Right Feet of Wearer>

In the example of FIG. 2, the information processing apparatus 10 may generate variation information based on the difference between the shapes of the left and right feet of the wearer W1. For example, the information processing apparatus 10 generates individual variation information on the left foot and the right foot of the wearer W1 according to their shapes. The information processing apparatus 10 then estimates that the time period during which the wearer W1 can comfortably wear the wearing article is the time period during which the score based on the variation information generated on the wearer W1's left foot is 80 or more and the score based on the variation information generated on the wearer W1's right foot is 80 or more.

In addition, for example, when there is a difference in shape between the wearer W1's left and right feet, the information processing apparatus 10 may generate variation information corresponding to the shape of the larger foot, and estimate the time period during which the wearer W1 can comfortably wear the wearing article based on the generated variation information.

### <3-7. Wearing Articles on which Information is to be Provided>

In the example of FIG. 2, the information processing apparatus 10 may determine a candidate for a wearing article recommended to the wearer W1, based on information such as the history of wearing articles previously purchased by the user U1 for the wearer W1 via an electronic commerce service and coordinates viewed in a coordination service. Then, based on the variation information of the identified candidate, the information processing apparatus 10 may estimate the time period during which the wearer W1 can comfortably wear the candidate, and provide information on the candidate together with information corresponding to the estimated time period. Further, the information processing apparatus 10 may provide information on a candidate with a priority based on the level of the score or the time period during which the score is 80 or higher.

### <4. Configuration of Information Processing Apparatus>

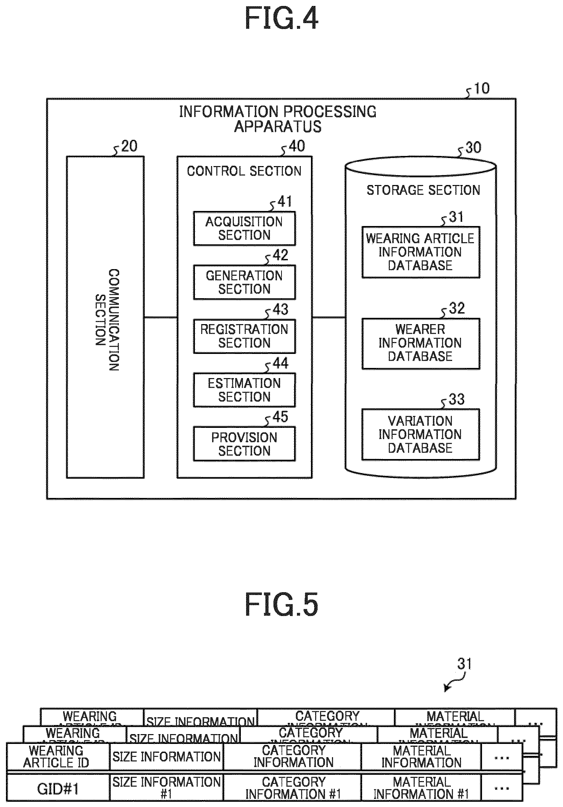

Next, a configuration of the information processing apparatus 10 will be described with reference to FIG. 4. FIG. 4 is a diagram illustrating an example of a configuration of the information processing apparatus 10 according to the embodiment. As illustrated in FIG. 4, the information processing apparatus 10 includes a communication section 20, a storage section 30, and a control section 40.

### (About Communication Section 20)

The communication section 20 is implemented by a network interface card (NIC), for example. The communication section 20 is connected to a network N by wire or wirelessly, and transmits and receives information to and from the user terminal 100 and the like.

### (About Storage Section 30)

The storage section 30 is implemented by a semiconductor memory element such as a random access memory (RAM) or a flash memory, or a storage device such as a hard disk or an optical disk, for example. As illustrated in FIG. 4, the storage section 30 has a wearing article information database 31, a wearer information database 32, and a variation information database 33.

### (About Wearing Article Information Database 31)

The wearing article information database 31 stores various types of information on wearing articles. An example of information stored in the wearing article information database 31 will be described with reference to FIG. 5. FIG. 5 is a diagram illustrating an example of the wearing article information database 31 according to the embodiment. In the example of FIG. 5, the wearing article information database 31 has items such as "wearing article ID", "size information", "category information", and "material information."

The "wearing article ID" indicates identification information for identifying a wearing article. The "size information" indicates the size of a wearing article. The "category information" indicates the category of a wearing article. The "material information" indicates the material of a wearing article.

That is, FIG. 5 illustrates an example in which the size information of a wearing article identified by a wearing article ID "GID#1" is "size information #1", the category information is "category information #1", and the material information is "material information #1".

### (About Wearer Information Database 32)

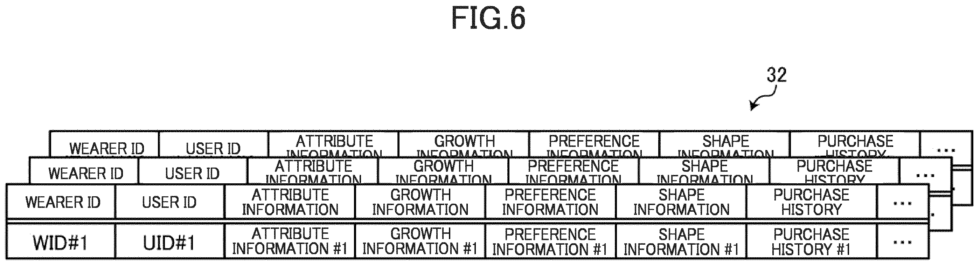

The wearer information database 32 stores various types of information on a wearer. An example of information stored in the wearer information database 32 will be described with reference to FIG. 6. FIG. 6 is a diagram illustrating an example of the wearer information database 32 according to the embodiment. In the example of FIG. 6, the wearer information database 32 has items such as "wearer ID", "user ID", "attribute information", "growth information", "preference information", "shape information", and "purchase history".

The "wearer ID" indicates identification information for identifying the wearer. The "user ID" indicates identification information for identifying a user who has a predetermined relationship with the wearer (for example, a parent of the wearer, or the like). The "attribute information" indicates the attributes of the wearer. The "growth information" indicates information on the growth of the wearer's body, the part of the body where the wearer wears the wearing article, and the like, and includes information on measurement via a predetermined measuring means, the history of that information, and the wearer's degree of growth estimated based on the wearer's attributes, and the like, for example. The "preference information" indicates the wearer's preferences for wearing articles (for example, preferences estimated based on the purchase history of wearing articles). The "shape information" indicates information on the part of the body where the wearer wears the wearing article. The "purchase history" indicates the history of wearing articles purchased by the wearer and the history of wearing articles presumably purchased by the user for the wearer.

That is, FIG. 6 shows an example in which a user having a predetermined relationship with a wearer identified by a wearer ID "WID#1" is identified by a user ID "UID#1", and the wearer's attribute information is "attribute information #1", the growth information is "growth information #1", the preference information is " preference information #1", the shape information is "shape information #1", and the purchase history is "purchase history # 1".

### (About Variation Information Database 33)

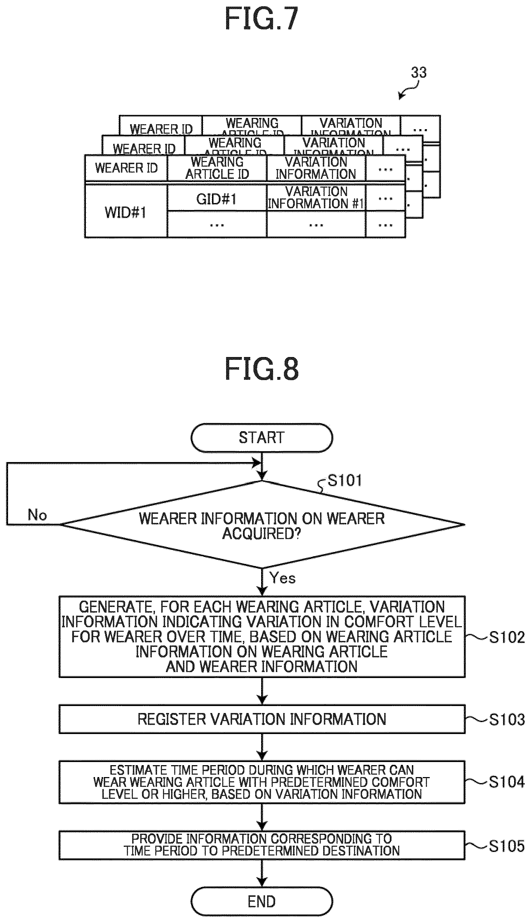

The variation information database 33 stores information indicating variation over time in the comfort level of the wearing article for the wearer. Here, an example of information stored in the variation information database 33 will be described with reference to FIG. 7. FIG. 7 is a diagram illustrating an example of the variation information database 33 according to the embodiment. In the example of FIG. 7, the variation information database 33 has items such as "wearer ID", "wearing article ID", and "variation information".

The "wearer ID" indicates identification information for identifying the wearer. The "wearing article ID" indicates identification information for identifying a wearing article. The "variation information" indicates the variation over time of the comfort level of the wearing article for the wearer.

That is, FIG. 7 shows an example in which the variation information indicating the variation over time of the comfort level of a wearing article identified by a wearing article ID "GID #1" for a wearer identified by a wearer ID "WID#1" is "variation information #1".

### (About Control Section 40)

The control section 40 is a controller, and is implemented by a processor such as a central processing Unit (CPU) or a micro processing Unit (MPU) executing various programs stored in a storage device inside the information processing apparatus 10 using the RAM as a working area, for example. The control section 40 is a controller and is implemented by an integrated circuit such as an application specific integrated circuit (ASIC) or a field programmable gate array (FPGA), for example. As illustrated in FIG. 4, the control section 40 according to the embodiment has an acquisition section 41, a generation section 42, a registration section 43, an estimation section 44, and a provision section 45, and implements or executes the functions and actions of information processing described below.

### (About Acquisition Section 41)

The acquisition section 41 acquires wearer information on the wearer. For example, in the example of FIG. 2, the acquisition section 41 acquires the wearer information on the wearer W1 from the user terminal 100 and stores the same in the wearer information database 32.

### (About Generation Section 42)

The generation section 42 generates, for each wearing article, variation information indicating variation in the comfort level for the wearer over time, based on the wearing article information on the wearing article and the wearer information on the wearer. For example, in the example of FIG. 2, the generation section 42 refers to the wearing article information database 31 and the wearer information database 32, and generates, for each wearing article, variation information indicating the variation in the comfort level for the wearer W1 over time based on the wearing article information on the wearing article and the wearer information.

The generation section 42 may also generate the variation information based on the attributes of the wearer. For example, in the example of FIG. 2, the generation section 42 generates, for each wearing article, variation information indicating variation in the comfort level for the wearer W1 over time, based on the attributes of the wearer W1.

The generation section 42 may also generate the variation information based on the wearer's degree of growth. For example, in the example of FIG. 2, the generation section 42 generates, for each wearing article, variation information indicating variation in the comfort level for the wearer W1 over time based on information indicating the degree of growth of the wearer W1's feet.

The generation section 42 may generate the variation information based on the wearer's preferences for the wearing article. For example, in the example of FIG. 2, the generation section 42 generates the variation information based on the wearing article information and the wearer information, the wearing article information including evaluations of the wearing article from users who have children as wearers with preferences similar to those of the wearer W1.

The generation section 42 may generate the variation information based on the shape of a part of the body where the wearer wears the wearing article. For example, in the example of FIG. 2, the generation section 42 generates variation information based on information indicating the shape of the feet of the wearer W1.

The generation section 42 may generate variation information based on differences in shape between corresponding parts of the body where the wearer wears the wearing article. For example, in the example of FIG. 2, the generation section 42 generates individual variation information corresponding to the respective shapes of the left foot and the right foot of the wearer W1. If there is a difference in shape between the left and right feet of the wearer W1, the generation section 42 of the information processing apparatus 10 generates variation information corresponding to the shape of the larger foot.

The generation section 42 may generate the variation information based on the material of the wearing article. For example, in the example of FIG. 2, the generation section 42 generates, for each wearing article, the variation information indicating variation in the comfort level over time for the wearer W1 based on the material of the wearing article.

### (About Registration Section 43)

The registration section 43 registers the variation information generated by the generation section 42. For example, in the example of FIG. 2, the registration section 43 registers (stores) the variation information F1, F2, F3, ... in the variation information database 33 in association with the wearer W1.

### (About Estimation Section 44)

The estimation section 44 estimates the time period during which the wearer can wear the wearing article with a predetermined comfort level or higher, based on variation information indicating variation over time in the comfort level of the wearing article for the wearer. For example, in the example of FIG. 2, the estimation section 44 refers to the variation information database 33, and estimates based on the variation information that, out of the time periods during which the wearing articles of individual sizes are to be worn, the time period with a score of 80 or higher is the time period during which the wearer W1 can comfortably wear the wearing article.

The estimation section 44 may also estimate the time period during which the wearer can wear the wearing article with a comfort level equal to or higher than that set by the provider. For example, in the example of FIG. 2, the estimation section 44 estimates the time period during which the wearer W1 can wear the wearing article with a comfort level equal to or higher than a threshold set by the user U1.

The estimation section 44 may estimate the time period during which the wearer can wear the wearing article with a comfort level equal to or higher than the comfort level corresponding to the category of the wearing article. For example, in the example of FIG. 2, if the category of the wearing article #1 is "sports shoes", the estimation section 44 places emphasis on the ease of movement when worn, sets the score threshold to 95, and estimates the time period during which the wearing article #1 can be worn with a score of 95 or above for each size of the wearing article #1.

The estimation section 44 may estimate the time period during which the wearer can wear the wearing article with a comfort level equal to or higher than the comfort level corresponding to the wearing article having been worn by the wearer. For example, in the example of FIG. 2, if the wearer W1 replaced the wearing article when the score fallen below 90, the estimation section 44 sets the score threshold to 90 and estimates, for each size of the wearing article #1, the time period during which the wearing article #1 can be worn with a score of 90 or more.

The estimation section 44 may estimate the time period during which the wearer can wear the wearing article with a predetermined comfort level or higher, based on the variation information based on the attributes of the wearer. For example, in the example of FIG. 2, the estimation section 44 estimates, based on the variation information based on the attributes of the wearer W1, that, out of the time periods during which the wearing articles of individual sizes are to be worn, the time period with a score of 80 or higher is the time period during which the wearer W1 can comfortably wear the wearing article.

The estimation section 44 may estimate the time period during which the wearer can wear the wearing article with a predetermined comfort level or higher, based on the variation information based on the wearer's degree of growth. For example, in the example of FIG. 2, the estimation section 44 estimates, based on the variation information based on the degree of growth of the wearer W1's feet, that, out of the time periods during which the wearing articles of individual sizes are to be worn, the time period with a score of 80 or higher is the time period during which the wearer W1 can comfortably wear the wearing article.

The estimation section 44 may estimate the time period during which the wearer can wear the wearing article with a predetermined comfort level or higher, based on the variation information based on the wearer's preferences for the wearing article. For example, in the example of FIG. 2, the estimation section 44 estimates, based on variation information based on the wearer W1's preferences for wearing articles, that, out of the time periods during which the wearing articles of individual sizes are to be worn, the time period with a score of 80 or higher is the time period during which the wearer W1 can comfortably wear the wearing article.

The estimation section 44 may estimate the time period during which the wearer can wear the wearing article with a predetermined comfort level or higher, based on the variation information based on the shape of the part of the body where the wearer wears the wearing article. For example, in the example of FIG. 2, the estimation section 44 estimates, based on the variation information based on information indicating the shape of the wearer W1's feet, that, out of the time periods during which the wearing articles of individual sizes are to be worn, the time period with a score of 80 or higher is the time period during which the wearer W1 can comfortably wear the wearing article.

The estimation section 44 may estimate the time period during which the wearer can wear the wearing article with a predetermined comfort level or higher based on the variation information based on a difference in shape between corresponding parts of the body where the wearer wears the wearing article. For example, in the example of FIG. 2, the estimation section 44 estimates that the time period during which the wearer W1 can comfortably wear the wearing article is the time period during which the score based on the variation information generated on the wearer W1's left foot is 80 or more and the score based on the variation information generated on the wearer W1's right foot is 80 or more. In addition, when there is a difference in shape of the wearer W1's left and right feet, the estimation section 44 estimates the time period during which the wearer W1 can comfortably wear the wearing article based on the variation information generated according to the shape of the larger foot.

The estimation section 44 may estimate the time period during which the wearer can wear the wearing article with a predetermined comfort level or higher, based on the variation information based on the material of the wearing article. For example, in the example of FIG. 2, the estimation section 44 estimates, based on the variation information based on the material of the wearing article, that, out of the time periods during which the wearing articles of individual sizes are to be worn, the time period with a score of 80 or higher is the time period during which the wearer W1 can comfortably wear the wearing article.

### (About Provision Section 45)

The provision section 45 provides information corresponding to the time period estimated by the estimation section 44 to a predetermined destination. For example, in the example of FIG. 2, the provision section 45 provides the information corresponding to the time period estimated by the estimation section 44 to the user terminal 100 via an electronic commerce service.

The provision section 45 may also provide information indicating a time period. For example, in the example of FIG. 2, the provision section 45 provides information indicating the time period during which the wearer W1 can comfortably wear the wearing article, for each size of the wearing article for which information provision has been requested.

The provision section 45 may provide the wearer with information indicating the timing at which the wearing article will fall below a predetermined comfort level. For example, in the example of FIG. 2, the provision section 45 provides information indicating the size of the wearing article and the time period during which the wearing article of that size can be worn comfortably "from the present to three months later" (in other words, the score will be less than 80 from three months onwards), as shown on the screen C1.

The provision section 45 may provide the wearer with information indicating the timing at which the wearing article will reach or exceed a predetermined comfort level. For example, in the example of FIG. 2, the provision section 45 provides information indicating the size of the wearing article and the time period during which the wearing article of that size can be worn comfortably "from four months later to ten months later" (in other words, the score will be 80 or higher from 4 months onwards), as shown on the screen C1.

The provision section 45 may provide the wearer with information on a second wearing article having a comfort level equal to or higher than a predetermined comfort level at a timing at which the first wearing article falls below a predetermined comfort level for the wearer. For example, in the example of FIG. 2, the provision section 45 provides information on wearing articles having a score of 80 or more at the replacement timing shown on the screen C2.

The provision section 45 may provide information on the second wearing article a predetermined time period before the timing. For example, in the example of FIG. 2, the provision section 45 provides the information shown on the screen C2 at a time point a predetermined period before the replacement timing, and provides the information on wearing articles having a score of 80 or more at the replacement timing.

The provision section 45 may provide information on a wearing article for which the time period is equal to or exceeds a predetermined threshold value. For example, in the example of FIG. 2, the provision section 45 provides information on wearing articles of a size for which the score is 80 or more and the time period is six months or more.

The provision section 45 may provide information on a wearing article for which the time period is longer with a higher priority. For example, in the example of FIG. 2, when providing information on the wearing article, the provision section 45 provides information on a wearing article for which the score is 80 or more for a longer time period with a higher priority.

### <5. Information Processing Flow>

A procedure of information processing by the information processing apparatus 10 according to the embodiment will be described with reference to FIG. 8. FIG. 8 is a flowchart illustrating an example of a procedure of information processing according to the embodiment.

As illustrated in FIG. 8, the information processing apparatus 10 determines whether wearer information on a wearer has been acquired (step S101). If no wearer information has been acquired (No in step S101), the information processing apparatus 10 waits until the wearer information is acquired.

If the wearer information is acquired (Yes in step S101), the information processing apparatus 10 generates, for each wearing article, variation information indicating variation in the comfort level for the wearer over time based on the wearing article information on the wearing article and the wearer information (step S102). Next, the information processing apparatus 10 registers the variation information (step S103). Next, the information processing apparatus 10 estimates a time period during which the wearer can wear the wearing article with a predetermined comfort level or higher, based on the variation information (step S104). Next, the information processing apparatus 10 provides the information corresponding to the time period to a predetermined destination (step S105), and ends the process.

### <6. Modifications>

The above-described embodiments are merely examples, and various modifications and applications are possible.

### <6-1. About Wearer>

In the above-described embodiments, the wearer is a child as an example, but the wearer is not limited to such an example. For example, the wearer may be an adult whose body has stopped growing. In addition, in the above-described embodiments, the recipient of information provided by the information processing apparatus 10 is a user other than the wearer as an example. However, the recipient of information is not limited to such an example, and the information may be provided to the wearer himself/herself.

### <6-2. About Wearing Article>

In the above-described embodiments, the wearing article is shoes as an example. However, the wearing article is not limited to such an example, and may be any article that is changed to an appropriate size in accordance with the wearer's physical growth and physical changes (such as changes in body shape). For example, the wearing article may be a top, bottoms, an accessory, or the like.

### <6-3. Processing Mode>

Of the various processes in the above-described embodiments, all or some of the processes described as being performed automatically may be performed manually, and in reverse, all or some of the processes described as being performed manually may be performed automatically using known methods. Besides, the information including the processing procedures, specific names, various data and parameters illustrated in the above text and drawings can be changed arbitrarily unless otherwise specified. For example, the various types of information illustrated in the diagrams is not limited to the information illustrated in the diagrams.

The components of the devices illustrated in the drawings are merely functional concepts, and do not necessarily have to be physically configured as illustrated in the drawings. That is, the specific forms of distribution and integration of the devices are not limited to those illustrated in the diagrams, and all or some of the devices can be functionally or physically distributed and integrated in any unit depending on various loads, usage conditions, and the like.

The above-described embodiments can be combined as appropriate without a contradiction in processing.

### <7. Advantageous Effects>

As described above, the information processing apparatus 10 according to the embodiment includes the acquisition section 41, the generation section 42, the registration section 43, the estimation section 44, and the provision section 45. The acquisition section 41 acquires wearer information on the wearer. The generation section 42 generates, for each wearing article, variation information indicating variation in the comfort level for the wearer over time, based on the wearing article information on the wearing article and the wearer information on the wearer. The registration section 43 registers the variation information generated by the generation section 42. The estimation section 44 estimates the time period during which the wearer can wear the wearing article with a predetermined comfort level or higher, based on variation information indicating variation over time in the comfort level of the wearing article for the wearer. The provision section 45 provides information corresponding to the time period estimated by the estimation section 44 to a predetermined destination.

Accordingly, the information processing apparatus 10 according to the embodiment can generate the variation information for each wearing article that indicates the variation in the comfort level for the wearer over time, estimate the time period during which the wearer can comfortably wear the wearing article based on the variation information, and provide information corresponding to the estimated time period, thereby generating information on the time period during which the wearer can comfortably wear the wearing article and presenting information on the wearing article that the wearer can wear comfortably.

In the information processing apparatus 10 according to the embodiment, the generation section 42 generates variation information based on the attributes of the wearer, for example. The generation section 42 generates the variation information based on the wearer's degree of growth. The generation section 42 generates the variation information based on the wearer's preferences for the wearing article. The generation section 42 generates the variation information based on the shape of a part of the body where the wearer wears the wearing article. The generation section 42 also generates the variation information based on the difference in shape between corresponding parts of the body where the wearer wears the wearing article. The generation section 42 also generates the variation information based on the material of the wearing article.

Accordingly, the information processing apparatus 10 according to the embodiment can generate the variation information based on various types of information, thereby improving the accuracy of estimating the time period during which the wearer can comfortably wear the wearing article.

In the information processing apparatus 10 according to the embodiment, the estimation section 44 estimates the time period during which the wearer can wear the wearing article with a comfort level equal to or higher than the comfort level set by the provider, for example. The estimation section 44 estimates the time period during which the wearer can wear the wearing article with a comfort level equal to or higher than the comfort level corresponding to the category of the wearing article. The estimation section 44 estimates the time period during which the wearer can wear the wearing article with a comfort level equal to or higher than the comfort level corresponding to the wearing article having been worn by the wearer.

Accordingly, the information processing apparatus 10 according to the embodiment can estimate the time period during which the wearing article can be worn comfortably depending on the wearer and the wearing article, thereby improving convenience.

In the information processing apparatus 10 according to the embodiment, the estimation section 44 estimates the time period during which the wearer can wear the wearing article with a predetermined comfort level or higher, based on the variation information based on the attributes of the wearer, for example. The estimation section 44 estimates the time period during which the wearer can wear the wearing article with a predetermined comfort level or higher, based on the variation information based on the wearer's degree of growth. The estimation section 44 estimates the time period during which the wearer can wear the wearing article with a predetermined comfort level or higher, based on the variation information based on the wearer's preferences for the wearing article. The estimation section 44 estimates the time period during which the wearer can wear the wearing article with a predetermined comfort level or higher, based on the variation information based on the shape of the part of the body where the wearer wears the wearing article. The estimation section 44 estimates the time period during which the wearer can wear the wearing article with a predetermined comfort level or higher based on the variation information based on a difference in shape between corresponding parts of the body where the wearer wears the wearing article. The estimation section 44 estimates the time period during which the wearer can wear the wearing article with a predetermined comfort level or higher, based on the variation information based on the material of the wearing article.

Accordingly, the information processing apparatus 10 according to the embodiment can use the variation information generated based on various types of information to estimate the time period during which the wearer can comfortably wear the wearing article, thereby improving the accuracy of the information provided.

In the information processing apparatus 10 according to the embodiment, the provision section 45 provides information indicating a time period, for example. The provision section 45 provides the wearer with information indicating the timing at which the wearing article will fall below a predetermined comfort level. The provision section 45 provides the wearer with information indicating the timing at which the wearing article will reach or exceed a predetermined comfort level. The provision section 45 provides the wearer with information about a second wearing article having a comfort level equal to or higher than a predetermined comfort level at a timing at which the first wearing article falls below a predetermined comfort level for the wearer. The provision section 45 provides information on the second wearing article a predetermined time period before the timing. The provision section 45 provides information on a wearing article for which the time period is equal to or exceeds a predetermined threshold value. The provision section 45 provides information on a wearing article for which the time period is longer with a higher priority.

Correspondingly, the information processing apparatus 10 corresponding to the embodiment can provide information corresponding to the time period during which the wearer can comfortably wear the wearing article, thereby providing a guideline for purchasing the wearing article.

### <8. Hardware Configuration>

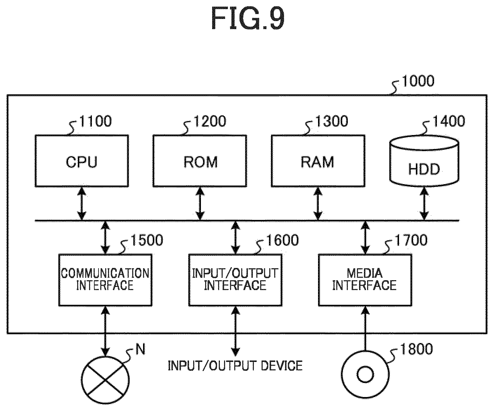

The information processing apparatus 10 according to each of the above-described embodiments is implemented by a computer 1000 having a configuration as illustrated in FIG. 9, for example. The computer 1000 will be described taking the information processing apparatus 10 as an example. FIG. 9 is a hardware configuration diagram illustrating an example of a computer that implements the functions of the information processing apparatus 10. The computer 1000 includes a CPU 1100, a ROM 1200, a RAM 1300, an HDD 1400, a communication interface (I/F) 1500, an input/output interface (I/F) 1600, and a media interface (I/F) 1700.

The CPU 1100 operates based on programs stored in the ROM 1200 or the HDD 1400, and controls each unit. The ROM 1200 stores a boot program executed by the CPU 1100 at startup of the computer 1000, programs that depend on the hardware of the computer 1000, and the like.

The HDD 1400 stores programs executed by the CPU 1100, data used by these programs, and the like. The communication interface 1500 receives data from other devices via a communication network 500 (corresponding to the network N in the embodiment) and sends the data to the CPU 1100, and also transmits data generated by the CPU 1100 to other devices via the communication network 500.

The CPU 1100 controls an output device such as a display or a printer, and an input device such as a keyboard or a mouse via the input/output interface 1600. The CPU 1100 acquires data from the input device via the input/output interface 1600. Furthermore, the CPU 1100 outputs the generated data to the output device via the input/output interface 1600.

The media interface 1700 reads the programs or data stored in a recording medium 1800, and provides the same to the CPU 1100 via the RAM 1300. The CPU 1100 loads these programs from the recording medium 1800 to the RAM 1300 via the media interface 1700, and executes the loaded programs. The recording medium 1800 includes, for example, an optical recording medium such as a digital versatile disc (DVD) or a phase-change-rewritable disk (PD), a magneto-optical recording medium such as a magneto-optical disk (MO), a tape medium, a magnetic recording medium, a semiconductor memory, or the like.

For example, when the computer 1000 functions as the information processing apparatus 10, the CPU 1100 of the computer 1000 executes programs loaded onto the RAM 1300 to implement the functions of the control section 40. The HDD 1400 also stores various data within the storage device of the information processing apparatus 10. The CPU 1100 of the computer 1000 reads these programs from the recording medium 1800 and executes them, but as another example, these programs may be acquired from other devices via a predetermined communication network.

### <9. Others>

As described above, some of the embodiments of the present application have been described in detail based on the drawings, but these are examples, and the present disclosure can be implemented in other modes that have been modified and improved in various ways based on the knowledge of those skilled in the art, including the aspects described in the section of the summery of the invention.

Further, the configuration of the information processing apparatus 10 described above can be flexibly changed by calling an external platform or the like using an application programming interface (API) or network computing to implement some functions, for example.

Further, the "sections" described in the claims can be read as "means" or "circuits." For example, the acquisition section can be read as an acquisition means or an acquisition circuit.

### <10. Recapitulation>

The contents disclosed herein can be recapitulated as follows.

A first aspect is an information processing apparatus comprising:
an estimation section that estimates a time period during which a wearer is allowed to wear a wearing article with a predetermined comfort level or higher based on variation information indicating variation over time in the comfort level of the wearing article for the wearer; and
a provision section that provides information corresponding to the time period estimated by the estimation section to a predetermined destination.

A second aspect is the information processing apparatus according to the first aspect, wherein the provision section provides information indicating the time period.

A third aspect is the information processing apparatus according to the first or second aspect, wherein the provision section provides the wearer with information indicating a timing at which the wearing article will fall below a predetermined comfort level.

A fourth aspect is the information processing apparatus according to any one of the first to third aspect, wherein the provision section provides the wearer with information indicating a timing at which the wearing article will reach or exceed the predetermined comfort level.

A fifth aspect is the information processing apparatus according to any one of the first to fourth aspect, wherein the provision section provides the wearer with information on a second wearing article having a comfort level equal to or higher than a predetermined comfort level at a timing at which the first wearing article falls below a predetermined comfort level for the wearer.

A sixth aspect is the information processing apparatus according to the fifth aspect, wherein the provision section provides information on the second wearing article a predetermined period before the timing.

A seventh aspect is the information processing apparatus according to any one of the first to sixth aspect, wherein the provision section provides information on a wearing article for which the time period is equal to or greater than a predetermined threshold value, among a plurality of the wearing articles.

An eighth aspect is the information processing apparatus according to any one of the first to seventh aspect, wherein the provision section provides information on a wearing article for which the time period is longer with a higher priority, among the plurality of wearing articles.

A ninth aspect is the information processing apparatus according to any one of the first to eighth aspect, wherein the estimation section estimates a time period during which the wearer is allowed to wear the wearing article with a comfort level equal to or higher than a comfort level set by the destination.

A tenth aspect is the information processing apparatus according to any one of the first to ninth aspect, wherein the estimation section estimates the time period during which the wearer is allowed to wear the wearing article with a comfort level or higher corresponding to a category of the wearing article.

An eleventh aspect is the information processing apparatus according to any one of the first to tenth aspect, wherein the estimation section estimates the time period during which the wearer is allowed to wear the wearing article that has not been worn by the wearer with a comfort level equal to or higher than the comfort level corresponding to the wearing article that has been worn by the wearer.

A twelfth aspect is the information processing apparatus according to any one of the first to eleventh aspect, wherein the estimation section estimates the time period during which the wearer is allowed to wear the wearing article with a predetermined comfort level or higher based on the variation information based on attributes of the wearer.

A thirteenth aspect is the information processing apparatus according to any one of the first to twelfth aspect, wherein the estimation section estimates the time period during which the wearer is allowed to wear the wearing article with a predetermined comfort level or higher based on the variation information based on the wearer's degree of growth.

A fourteenth aspect is the information processing apparatus according to any one of the first to thirteenth aspect, wherein the estimation section estimates the time period during which the wearer is allowed to wear the wearing article with a predetermined comfort level or higher based on the variation information based on the wearer's preference for the wearing article.

A fifteenth aspect is the information processing apparatus according to any one of the first to fourteenth aspect, wherein the estimation section estimates the time period during which the wearer is allowed to wear the wearing article with a predetermined comfort level or higher based on the variation information based on a shape of a part of the body where the wearer wears the wearing article.

A sixteenth aspect is the information processing apparatus according to any one of the first to fifteenth aspect, wherein the estimation section estimates the time period during which the wearer is allowed to wear the wearing article with a predetermined comfort level or higher based on the variation information based on a difference in shape between corresponding parts of the body where the wearer wears the wearing article.

A seventeenth aspect is the information processing apparatus according to any one of the first to sixteenth aspect, wherein the estimation section estimates the time period during which the wearer is allowed to wear the wearing article with a predetermined comfort level or higher based on the variation information based on a material of the wearing article.

An eighteenth aspect is the information processing apparatus according to any one of the first to seventeenth aspect, further comprising a generation section that generates the variation information on each of the plurality of wearing articles based on wearing article information on each of the plurality of wearing articles and wearer information on the wearer.

A nineteenth aspect is an information processing apparatus comprising:
a generation section that generates, for each of a plurality of wearing articles, variation information that indicates variation in comfort level for a wearer over time based on wearing article information on each of the plurality of wearing articles and wearer information on the wearer; and
a registration section that registers the variation information generated by the generation section.

A twentieth aspect is the information processing apparatus according to any one of the eighteenth or nineteenth aspect, wherein the generation section generates the variation information based on attributes of the wearer.

A twenty-first aspect is the information processing apparatus according to any one of the eighteenth to twentieth aspect, wherein the generation section generates the variation information based on the wearer's degree of growth.

A twenty-second aspect is the information processing apparatus according to any one of the eighteenth to twenty-first aspect, wherein the generation section generates the variation information based on the wearer's preference for the wearing article.

A twenty-third aspect is the information processing apparatus according to any one of the eighteenth to twenty-second aspect, wherein the generation section generates the variation information based on a shape of a part of the body where the wearer wears the wearing article.

A twenty-fourth aspect is the information processing apparatus according to any one of the eighteenth to twenty-third aspect, wherein the generation section generates the variation information based on a difference in shape between corresponding parts of the body where the wearer wears the wearing article.

A twenty-fifth aspect is the information processing apparatus according to any one of the eighteenth to twenty-fourth aspect, wherein the generation section generates the variation information based on a material of the wearing article.

A twenty-sixth aspect is an information processing method executed by a computer, the method comprising:
an estimation step of estimating a time period during which a wearer is allowed to wear a wearing article with a predetermined comfort level or higher based on variation information indicating variation over time in the comfort level of the wearing article for the wearer; and
a provision step of providing information corresponding to the time period estimated by the estimation step to a predetermined destination.

A twenty-seventh aspect is an information processing method executed by a computer, the method comprising:
a generation step of generating, for each of a plurality of wearing articles, variation information that indicates variation in comfort level for a wearer over time based on wearing article information on each of the plurality of wearing articles and wearer information on the wearer; and
a registration step of registering the variation information generated by the generation step.

A twenty-eighth aspect is a program that causes a computer to execute:
an estimation process for estimating a time period during which a wearer is allowed to wear a wearing article with a predetermined comfort level or higher based on variation information indicating variation over time in the comfort level of the wearing article for the wearer; and
a provision process for providing information corresponding to the time period estimated by the estimation process to a predetermined destination.

A twenty-ninth aspect is a program that causes a computer to execute:
a generation process for generating, for each of a plurality of wearing articles, variation information that indicates variation in comfort level for a wearer over time based on wearing article information on each of the plurality of wearing articles and wearer information on the wearer; and
a registration process for registering the variation information generated by the generation process.

### [REFERENCE SIGNS LIST]

10 information processing apparatus
20 communication section
30 storage section
31 wearing article information database
32 wearer information database
33 variation information database
40 control section
41 acquisition section
42 generation section
43 registration section
44 estimation section
45. provision section
100 user terminal

## Claims

1. An information processing apparatus comprising:
an estimation section that estimates a time period during which a wearer is allowed to wear a wearing article with a predetermined comfort level or higher based on variation information indicating variation over time in the comfort level of the wearing article for the wearer; and
a provision section that provides information corresponding to the time period estimated by the estimation section to a predetermined destination.

2. The information processing apparatus according to claim 1, wherein the provision section provides information indicating the time period.

3. The information processing apparatus according to claim 1 or 2, wherein the provision section provides the wearer with information indicating a timing at which the wearing article will fall below a predetermined comfort level.

4. The information processing apparatus according to any one of claims 1 to 3, wherein the provision section provides the wearer with information indicating a timing at which the wearing article will reach or exceed the predetermined comfort level.

5. The information processing apparatus according to any one of claims 1 to 4, wherein the provision section provides the wearer with information on a second wearing article having a comfort level equal to or higher than a predetermined comfort level at a timing at which the first wearing article falls below a predetermined comfort level for the wearer.

6. The information processing apparatus according to claim 5, wherein the provision section provides information on the second wearing article a predetermined period before the timing.

7. The information processing apparatus according to any one of claims 1 to 6, wherein the provision section provides information on a wearing article for which the time period is equal to or greater than a predetermined threshold value, among a plurality of the wearing articles.

8. The information processing apparatus according to any one of claims 1 to 7, wherein the provision section provides information on a wearing article for which the time period is longer with a higher priority, among the plurality of wearing articles.

9. The information processing apparatus according to any one of claims 1 to 8, wherein the estimation section estimates a time period during which the wearer is allowed to wear the wearing article with a comfort level equal to or higher than a comfort level set by the destination.

10. The information processing apparatus according to any one of claims 1 to 9, wherein the estimation section estimates the time period during which the wearer is allowed to wear the wearing article with a comfort level or higher corresponding to a category of the wearing article.

11. The information processing apparatus according to any one of claims 1 to 10, wherein the estimation section estimates the time period during which the wearer is allowed to wear the wearing article that has not been worn by the wearer with a comfort level equal to or higher than the comfort level corresponding to the wearing article that has been worn by the wearer.

12. The information processing apparatus according to any one of claims 1 to 11, wherein the estimation section estimates the time period during which the wearer is allowed to wear the wearing article with a predetermined comfort level or higher based on the variation information based on attributes of the wearer.

13. The information processing apparatus according to any one of claims 1 to 12, wherein the estimation section estimates the time period during which the wearer is allowed to wear the wearing article with a predetermined comfort level or higher based on the variation information based on the wearer's degree of growth.

14. The information processing apparatus according to any one of claims 1 to 13, wherein the estimation section estimates the time period during which the wearer is allowed to wear the wearing article with a predetermined comfort level or higher based on the variation information based on the wearer's preference for the wearing article.

15. The information processing apparatus according to any one of claims 1 to 14, wherein the estimation section estimates the time period during which the wearer is allowed to wear the wearing article with a predetermined comfort level or higher based on the variation information based on a shape of a part of the body where the wearer wears the wearing article.

16. The information processing apparatus according to any one of claims 1 to 15, wherein the estimation section estimates the time period during which the wearer is allowed to wear the wearing article with a predetermined comfort level or higher based on the variation information based on a difference in shape between corresponding parts of the body where the wearer wears the wearing article.

17. The information processing apparatus according to any one of claims 1 to 16, wherein the estimation section estimates the time period during which the wearer is allowed to wear the wearing article with a predetermined comfort level or higher based on the variation information based on a material of the wearing article.

18. The information processing apparatus according to any one of claims 1 to 17, further comprising a generation section that generates the variation information on each of the plurality of wearing articles based on wearing article information on each of the plurality of wearing articles and wearer information on the wearer.

19. An information processing apparatus comprising:
a generation section that generates, for each of a plurality of wearing articles, variation information that indicates variation in comfort level for a wearer over time based on wearing article information on each of the plurality of wearing articles and wearer information on the wearer; and
a registration section that registers the variation information generated by the generation section.

20. The information processing apparatus according to claim 18 or 19, wherein the generation section generates the variation information based on attributes of the wearer.

21. The information processing apparatus according to any one of claims 18 to 20, wherein the generation section generates the variation information based on the wearer's degree of growth.

22. The information processing apparatus according to any one of claims 18 to 21, wherein the generation section generates the variation information based on the wearer's preference for the wearing article.

23. The information processing apparatus according to any one of claims 18 to 22, wherein the generation section generates the variation information based on a shape of a part of the body where the wearer wears the wearing article.

24. The information processing apparatus according to any one of claims 18 to 23, wherein the generation section generates the variation information based on a difference in shape between corresponding parts of the body where the wearer wears the wearing article.

25. The information processing apparatus according to any one of claims 18 to 24, wherein the generation section generates the variation information based on a material of the wearing article.

26. An information processing method executed by a computer, the method comprising:
an estimation step of estimating a time period during which a wearer is allowed to wear a wearing article with a predetermined comfort level or higher based on variation information indicating variation over time in the comfort level of the wearing article for the wearer; and
a provision step of providing information corresponding to the time period estimated by the estimation step to a predetermined destination.

27. An information processing method executed by a computer, the method comprising:
a generation step of generating, for each of a plurality of wearing articles, variation information that indicates variation in comfort level for a wearer over time based on wearing article information on each of the plurality of wearing articles and wearer information on the wearer; and
a registration step of registering the variation information generated by the generation step.

28. A program that causes a computer to execute:
an estimation process for estimating a time period during which a wearer is allowed to wear a wearing article with a predetermined comfort level or higher based on variation information indicating variation over time in the comfort level of the wearing article for the wearer; and
a provision process for providing information corresponding to the time period estimated by the estimation process to a predetermined destination.

29. A program that causes a computer to execute:
a generation process for generating, for each of a plurality of wearing articles, variation information that indicates variation in comfort level for a wearer over time based on wearing article information on each of the plurality of wearing articles and wearer information on the wearer; and
a registration process for registering the variation information generated by the generation process.
